(19) Europäisches Patentamt
European Patent Office
Office européen des brevets

(11) EP 2 777 397 B2

(12) NEW EUROPEAN PATENT SPECIFICATION
After opposition procedure

(45) Date of publication and mention of the opposition decision:
**12.06.2024 Bulletin 2024/24**

(45) Mention of the grant of the patent:
**02.01.2019 Bulletin 2019/01**

(21) Application number: **14159214.7**

(22) Date of filing: **12.03.2014**

(51) International Patent Classification (IPC):
***A01N 39/02*** ***(2006.01)*** ***A01N 43/80*** ***(2006.01)***
***A01N 37/22*** ***(2006.01)*** ***A01N 33/18*** ***(2006.01)***
***A01N 43/40*** ***(2006.01)*** ***A01N 43/707*** ***(2006.01)***
***A01P 13/02*** ***(2006.01)***

(52) Cooperative Patent Classification (CPC):
(C-Sets available)
**A01N 39/02; A01N 43/80** (Cont.)

# (54) Selective weed control using D-napropamide

Selektive Unkrautbekämpfung mit D-Napropamid

Lutte sélective contre les mauvaises herbes à l'aide de D-Napropamide

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201313839979**
**15.03.2013 GB 201304706**

(43) Date of publication of application:
**17.09.2014 Bulletin 2014/38**

(60) Divisional application:
**17199996.4 / 3 318 126**
**23215904.6 / 4 327 660**

(73) Proprietor: **UPL Limited**
**Mumbai 400 052**
**MAH (IN)**

(72) Inventors:
- **Shroff, Jaidev Rajnikant**
**400 052 Mumbai (IN)**
- **Shroff, Vikram Rajnikant**
**400 052 Mumbai (IN)**
- **Heller, Jean-Jaques**
**92400 Courbevoie (FR)**

(74) Representative: **J A Kemp LLP**
**80 Turnmill Street**
**London EC1M 5QU (GB)**

(56) References cited:
**EP-A2- 0 292 154** **WO-A2-2009/004642**
**CN-A- 101 731 235** **US-A- 3 718 455**
**US-A1- 2010 234 225**

- **GLAZE ET AL: "Weed control in direct-seeded tomato, Lycopersicon esculentum, for transplants", WEED TECHNOLOGY, CHAMPAIGN, IL, US, vol. 2, no. 3, 1 January 1988 (1988-01-01) , pages 333-337, XP009178298, ISSN: 0890-037X**
- **VELEV B ET AL: "Use of the herbicide napropamide on directly seeded tomatoes", GRADINARSKA I LOZARSKA NAUKA,, vol. 16, no. 5-6, 1 January 1979 (1979-01-01), pages 97-104, XP009178299,**
- **DATABASE CA [Online] CHEMICAL ABSTRACTS SERVICE, COLUMBUS, OHIO, US; MAC GIOLLA RI, P.: "Herbicide programs in soft fruit crops aimed at minimizing the development of resistant weed populations", XP002725959, retrieved from STN Database accession no. 1990:231213 & MAC GIOLLA RI, P.: "Herbicide programs in soft fruit crops aimed at minimizing the development of resistant weed populations", COMM. EUR. COMMUNITIES, [REP.] EUR , EUR 11561, 111-19 CODEN: CECED9; ISSN: 0303-755X, 1989,**
- **Y. ESHEL ET AL: "SELECTIVE ACTION OF DIPHENAMID AND NAPROPAMIDE IN PEPPER (GAPSICUM ANNUUM L.) AND WEEDS", WEED RESEARCH, vol. 13, no. 4, 1 December 1973 (1973-12-01), pages 379-384, XP55121319, ISSN: 0043-1737, DOI: 10.1111/j.1365-3180.1973.tb01290.x**
- **CHAN J H H ET AL: "Synthesis and Herbicidal activity of N,N-diethyl-2-(1-naphthyloxy)propionamide and its optical isomers", JOURNAL OF AGRICULTURAL AND FOOD CHEMISTRY, AMERICAN CHEMICAL SOCIETY, US, vol. 23, no. 5, 1 January 1975 (1975-01-01), pages 1008-1010, XP002665062, ISSN: 0021-8561**



**(Cont. next page)**

- **H. JACQUEMET et al.: "La Napropamide un nouvel herbicide de pre-semis pour les culture de colza", 4th International Rapeseed Congress, 1974, pages 217-223, Giessen, Germany**
- **Anonymous: "Weed, Wikipedia the free encyclopedia", , 19 September 2019 (2019-09-19), pages 1-9, Retrieved from the Internet: URL:https://en.wikipedia.org/wiki/Weed**
- **ESHEL Y et al.: "SELECTIVE ACTION OF DIPHENAMID AND NAPROPAMIDE IN PEPPER (GAPSICUM ANNUUM L.) AND WEEDS", Weeds Res., vol. 13, 1973, pages 379-384,**
- **CHAN JHH et al.: "Synthesis and herbicidal activity of N,N-diethyl-2-(1-naphthyloxy)propionamide and its optical isomers", J. AGRICULTURAL AND FOOD CHEMISTRY, vol. 23, no. 5, 1975, pages 1008-1010,**
- **REGNAULT, Y: "Winter rapeseed weeding: Devrinol", Informations Techniques, vol. 78, 1982, pages 25-36,**
- **ARMSTRONG, DW et al.: "RELEVANCE OF ENANTIOMERIC SEPARATIONS IN ENVIRONMENTAL SCIENCE", Environmental Pollution, vol. 79, 1993, pages 51-58,**


Remarks:

The file contains technical information submitted after the application was filed and not included in this specification

(52) Cooperative Patent Classification (CPC): (Cont.)

C-Sets

**A01N 39/02, A01N 33/18, A01N 37/22, A01N 43/40, A01N 43/707, A01N 43/80; A01N 43/80, A01N 37/22**

## Description

## FIELD OF INVENTION:

The present invention relates to the use of Napropamide-M for selective control of dicotyledonous weeds.

## BACKGROUND AND PRIOR ARTS:

Many herbicides are reported in the prior art. However, the herbicidal effectiveness of a given compound cannot be predicted from an examination of the substituent groups of the compound and often quite closely related compounds, which will have quite different weed control abilities. Various herbicides or the isomers of the same herbicide may have overlapping or complementary areas of activity or selectivity, and can thus be useful to control a variety of weeds upon application of a composition. Furthermore, the various known herbicides are not completely effective. An ideal herbicide should give selective weed control, over the full growing season, with a single administration. It should be able to control all common weeds by controlling their growth and reproduction as the seed, the germinating seed, the seedling, and the growing plant.

Although the enantiomers of chiral substances have the same physicochemical properties, their biochemical activities can be quite different because biochemical processes usually show high stereo- or enantioselectivity.

The "active" enantiomer of a chiral chemical may have the desired effect on a target species, whereas the other enantiomer may not. It is advisable to use only the biologically active enantiomers, thereby reducing the total amount of chemical pollutants released into the environment.

Many agrochemicals have chiral structures. For example, about 30% of currently registered pesticide active ingredients contain one or more chiral centres. Herbicides are used to control the growth of undesired vegetation, and they account for most of the agrochemicals in use today. Some chiral herbicides are sold as purified, optically active isomers, but for economic reasons, many others are still used as racemates. Different enantiomers of chiral herbicides can have different enantioselective activities on target weeds and different toxic effects on non-target organisms because of their enantioselective interactions with enzymes and biological receptors in organisms but the herbicidal selectivity of a specific isomer is not predictable.

N,N-diethyl-2-($\alpha$-naphthoxy)propionamide is known as napropamide, and its racemic mixture is generally marketed under trade name as "Devrinol". It is used for pre-emergence control of annual grasses and broad-leaved weeds in many crops and plantations.

The second carbon atom at the propionamide group in napropamide has a hydrogen atom, a methyl group, a naphthoxy moiety and a carboxamide group thereby forming a chiral centre. Hence the molecule [Fig I] can exist in two chiral stereoisomers: D or (R) and L or (S)-isomers.

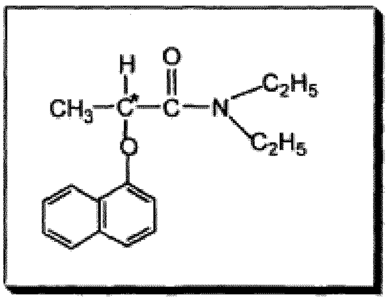

Napropramide is a selective systemic herbicide absorbed by roots and translocated acripetally. It inhibits root development and growth.

Unsolved problems in this area include widely differing sensitivities of crop plants against herbicidal chemicals as well as the fact that repression of one weed species may cause increased growth of another competing weed species, and that some weeds tend to become resistant against previously effective herbicides.

US3718455 discloses new organic compounds of formula I used as herbicides.

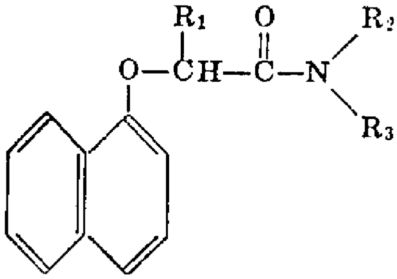

This structure includes the compound Napropamide (Compound No. 54 and Compound No. 55). The herbicidal activity of compounds 1 to 22 is reported on crabgrass, annual bluegrass, watergrass and foxtail. This patent discloses that Compound No. 54 and Compound No. 55 possess good herbicidal activity and can be used as pre-emergent and post-emergent herbicides (Table III). This patent disclosure did not investigate and does not indicate any differential selectivity of D-Napropamide towards different weed classes or types.

WO2009004642 discloses a process for manufacture of high purity D-(-)-N,N-diethyl-2-(a-naphthoxy)propionamide from L-2-Halopropionic Acid or (s)-(-)-2-Halopropionic Acid and composition comprising high purity D-(-)-N,N-diethyl-2- (a-naphthoxy)propionamide. Again, this patent disclosure did not investigate and does not indicate any differential selectivity of D-Napropamide towards different weed classes or types.

CN101731235 discloses a soybean, peanut and rape field weeding composition comprising clomazone and napropamide.

US 20100234225 A1 discloses a composition comprising: i) a microencapsulated pesticide (i.e. clomazone), ii) a dispersant selected from the group consisting of a) a lignin, b) a lignosulfonate salt and c) a lignosulfonate salt combined with the sodium salt of substituted naphthalene sulfonate formaldehyde polymer; and iii) a salt selected from the group consisting of magnesium sulfate, sodium chloride, sodium nitrate and calcium chloride iv) a non-encapsulated pesticide (i.e. napropamide, linuron and metribuzin.).

EP0292154A2 relates to racemic Napropamide in combination with Diflufenican.

An article by Glaze, N.C. titled "Weed Control in Direct-Seeded Tomato, Lycopersicon esculentum, for Transplants" (Weed Technology, 1988; Vol:2, Nr:3, Page(s):333 - 337) discloses studies that were conducted to determine the efficacy and crop tolerance of several herbicides alone or in combination on direct seeded tomato.The article discloses studies of the weed control, crop injury and yield with the combination of Napropramide + Pendimethalin and Napropramide + metolachlor and other actives and combinations.

An article by Velev B; Rankov V (Gradinarska I Lozarska Nauka, Vol:16, Nr:5-6, Page(s):97 - 104) discloses use of the herbicide napropamide on directly seeded tomatoes. The article further discloses that a combination of Napropramide + metribuzine has selectivity towards direct seed tomatoes and reduces the inhibition phase in the development of soil microflora.

An article by Mac Giolla Ri, P. (Comm. Eur. Communities, [Rep.] Eur, Eur 11561, 111-19; 1989) entitled "Herbicide programs in soft fruit crops aimed at minimising the development of resistant weed populations" [ISSN 0303-755X] discloses weed control of Senecio vulgaris, Galium aparine, Aphanes arvensis, viola arvensis, sherdia arvensis and epilobium montanum in strawberry with different herbicides. It also discloses that the Pendiemthalin + Napropamide combination gave satisfactory weed control without affecting the yield. However the combination of Napropramide + Simazine and isoxaben had no effect on the yield.

Chan et al, J. Agric. Food Chem., 23(5), 1008-1010, (1975), reported that the (D)-isomer of napropamide shows 8 times more activity than the (L)-isomer, for certain weeds.

There is a need in the art for enhanced uses of D-Napropamide and for improved methods of herbicidal control by using D-Napropamide.

## SUMMARY OF THE INVENTION:

The present invention provides the use of D-Napropamide as a herbicide for the effective selective control of dicotyledonous weeds at a locus, wherein D-Napropamide is applied at said locus, wherein a monocotyledonous plant species is present at said locus or is planted at said locus after the application of D-Napropamide, and wherein said D-Napropamide exhibits no control, or less control, of said monocotyledonous plant species as compared with the control exhibited against the dicotyledonous weed; wherein the locus is the vicinity of a desired crop selected from winter oilseed rape, strawberries, blackcurrants, gooseberries, raspberries, field trees, shrubs, broccoli, cabbage, calabrese, cauliflower, kale and Brussels sprouts.

In preferred embodiments of such use said use of D- Napropamide is use as a herbicide applied at said locus and effective to control said dicotyledonous weed, and wherein a monocotyledonous plant species is present at said locus.

In preferred embodiments of such use said use of D- Napropamide is use as a herbicide applied at said locus and effective to control said dicotyledonous weed, and wherein a monocotyledonous plant species is planted at said locus after said application of D-Napropamide.

In some preferred embodiments of such use said monocotyledonous plant species can be the desired crop.

In preferred embodiments of such use said D- Napropamide is substantially inactive against said monocotyledonous plant species.

In some preferred embodiments of such use D-Napropamide can be applied to said locus before or after emergence of the dicotyledonous weed.

In preferred embodiments of such use the dicotyledonous weed can be selected from the group comprising chickweed, speedwell, poppy, field bindweed, hairy fleabane, nettleleaf goosefoot, common groundsel, horseweed, common lambsquarters, little mallow, burning nettle, sowthistles, carpetweed, fat hen, blackberry nightshade, small flowered mallow, nettles, deadnettle, knotweed, common sowthistle and amaranthus. Preferably, the dicotyledonous weed is selected from Cirsium arvense, *Taraxacum officinale, Ranunculus repens, Senecio vulgaris, Papaver rohoeas, Veronica persica, Matricaria sp. Fallopia Convolvulus, Veronica arvensis, Veronica hederofolia, Stellaria media* and *Polygonum convolvulus.* The dicotyledonous weed is preferably chickweed (*Stellaria media*).

In preferred embodiments of such use the D-Napropamide is applied to said locus at an application rate of 0.5 to 3.0 kg active ingredient/hectare.

In preferred embodiments of such use can be in conjunction with a second herbicide, or, in conjunction with a second and a third herbicide.

In preferred embodiments of such use the D-Napropamide and the second herbicide, or the second and third herbicides, are applied as a herbicide combination.

In some preferred embodiments the administration is done by application either before seeding, during seeding, or, after seeding and before the crop emerges.

In some preferred embodiments D-Napropamide is administered prior to the emergence of any weed.

## DETAILED DESCRIPTION OF THE INVENTION:

In this specification, the terms Napropamide-M and D-Napropamide are used interchangeably.

Racemic Napropamide has a satisfactorily good herbicidal activity. D-Napropamide possesses improved activity than L-Napropamide. A comparatively similar distribution of herbicidal activity enhancement by use of D-Napropamide (over racemic Napropamide) for monocotyledonous weeds as well as dicotyledonous weeds was expected. It was surprisingly found that D-Napropamide demonstrates a selectively enhanced control in the growth of dicotyledonous weeds in agronomic crops vis-à-vis the control in monocotyledonous weeds.

Therefore, in an embodiment, the present invention provides the use of D-Napropamide as a herbicide for the effective selective control of dicotyledonous weeds at a locus, wherein D-Napropamide is applied at said locus, wherein a monocotyledonous plant species is present at said locus or is planted at said locus after the application of D-Napropamide, and wherein said D- Napropamide exhibits no control, or less control, of said monocotyledonous plant species as compared with the control exhibited against the dicotyledonous weed; wherein the locus is the vicinity of a desired crop selected from winter oilseed rape, strawberries, blackcurrants, gooseberries, raspberries, field trees, shrubs, broccoli, cabbage, calabrese, cauliflower, kale and Brussels sprouts.

The term locus as used herein shall denote the vicinity of a desired crop in which weed control, typically selective weed control, of dicotyledonous weeds is desired. The locus includes the vicinity of desired crop plants wherein the weed infestation has either emerged or is yet to emerge. The term crop shall include a multitude of desired crop plants or an individual crop plant growing at a locus.

The term control indicates eradication of the investigated weed(s). A 100% control signifies total eradication of the weed(s) under investigation.

Preferably, treating the locus with D-Napropamide comprises administering to the soil in which the desired crop is to be planted, an effective amount of D-Napropamide. The administration is preferably by application either before seeding, during seeding, or, as in most applications, after seeding and before the crop emerges, so as to prevent the emergence of any weeds.

In an embodiment, D-Napropamide is administered prior to the emergence of any weed.

The crops which show pre-emergence tolerance to D- Napropamide and in which this compound can be used as a herbicide are winter oilseed rape, strawberries, blackcurrants, gooseberries, raspberries, field trees, shrubs, broccoli, cabbage, calabrese, cauliflower, kale and Brussels sprouts.

In an embodiment, the dicotyledonous weeds which were found surprisingly susceptible to D-Napropamide are selected from the group comprising chickweed, speedwell, poppy, field bindweed, hairy fleabane, nettleleaf goosefoot, common groundsel, horseweed, common lambsquarters, little mallow, burning nettle, sowthistles, carpetweed, fat hen, blackberry nightshade, small flowered mallow, nettles, deadnettle, knotweed, common sowthistle and amaranthus.

However, it should be understood that the use of D-Napropamide of the present invention is not limited to the control of these weeds alone but is applicable to any dicotyledonous weed.

The herbicide of the invention can be applied to the soil or to crops in any amount which will give the required control of weeds. A preferred rate of application is from about 0.5 to about 20 L/Ha of D Napropamide, and most preferably from about 1 to about 8 L/Ha.

In an embodiment, Napropamide-M may be preferably used for control of dicotyledonous weeds in oil-seed rape at a dose of 500 - 1500 g/Ha, preferably 750-850 g/Ha.

In another embodiment, Napropamide-M may be preferably used in field crops in the range of 450-600 g/Ha.

In another embodiment, Napropamide-M may be used in perennial crops at a dosage of 2000-3000 g/Ha.

In an embodiment, the dicotyledonous weeds especially susceptible to D-Napropamide may be selected from the group consisting of *Acalypha gracilens, Acalypha ostryifolia, Acalypha rhomboidea, Acalypha virginica, Acer rubrum, Acer saccharinum, Actaea pachypoda, Actaea racemosa, Aeschynomene virginica, Agalinis purpurea, Agalinis setacea, Agalinis tenuifolia, Agastache nepetoides, Agastache scrophulariifolia, Ageratina altissima, Ageratina aromatica, Agrimonia parviflora, Agrimonia pubescens, Agrimonia rostellata, Alnus serrulata, Amaranthus cannabinus, Amaranthus hybridus, Amaranthus spinosus, Ambrosia artemisiifolia, Ambrosia trifida, Amelanchier arborea, Amelanchier Canadensis, Amelanchier laevis, Amelanchier obovalis, Amelanchier stolonifera, Amorpha fruticosa, Amphicarpaea bracteata, Anaphalis margaritacea, Anemone quinquefolia, Anemone virginiana, Angelica venenosa, Antennaria plantaginifolia, Apocynum androsaemifolium, Apocynum cannabinum, Aquilegia Canadensis, Arabis lyrata, Aralia nudicaulis, Aralia racemosa, Aralia spinosa, Argemone Mexicana, Aristolochia serpentaria, Arnoglossum atriplicifolium, Arnoglossum reniforme, Artemisia campestris, Artemisia ludoviciana, Asarum canadense, Asclepias amplexicaulis, Asclepias incarnate, Asclepias purpurascens, Asclepias quadrifolia, Asclepias rubra, Asclepias syriaca, Asclepias tuberose, Asclepias variegate, Asclepias verticillata, Aureolaria pedicularia, Aureolaria virginica, Baccharis halimifolia, Baptisia tinctoria, Bartonia paniculata, Bartonia virginica, Betula nigra, Betula populifolia, Bidens aristosa, Bidens bidentoides, Bidens bipinnata, Bidens cernua, Bidens coronate, Bidens discoidea, Bidens frondosa, Bidens laevis, Bidens tripartite, Boehmeria cylindrical, Brasenia schreberi, Brickellia eupatorioides, Cakile edentula, Callitriche heterophylla, Callitriche terrestris, Caltha palustris, Calystegia spithamaea, Campanula aparinoides, Campsis radicans, Cardamine bulbosa, Cardamine concatenate, Cardamine parviflora, Cardamine pensylvanica, Carya alba, Carya glabra, Carya ovate, Carya pallid, Castanea dentate, Castanea pumila, Castilleja coccinea, Catalpa bignonioides, Ceanothus americanus, Celastrus scandens, Celtis occidentalis, Celtis tenuifolia, Cephalanthus occidentalis, Cerastium nutans, Ceratophyllum demersum, Cercis Canadensis, Chaerophyllum procumbens, Chamaecrista fasciculate, Chamaecrista nictitans, Chamaedaphne calyculata, Chamaesyce maculate, Chamaesyce nutans, Chamaesyce polygonifolia, Chamerion angustifolium, Chelone glabra, Chenopodium pratericola, Chenopodium rubrum, Chenopodium simplex, Chimaphila maculate, Chimaphila umbellate, Chionanthus virginicus, Chrysopsis mariana, Chrysosplenium americanum, Cicuta bulbifera, Cicuta maculate, Hybanthus concolor, Hydrastis Canadensis, Hydrocotyle Americana, Hydrocotyle umbellate, Hydrocotyle verticillata, Hypericum boreale, Hypericum canadense, Hypericum crux-andreae, Hypericum densiflorum, Hypericum denticulatum, Hypericum ellipticum, Hypericum gentianoides, Hypericum hypericoides, Hypericum majus, Hypericum mutilum, Hypericum punctatum, Ilex glabra, Ilex laevigata, Ilex mucronata, Ilex opaca, Ilex verticillata, Impatiens capensis, Ionactis linariifolius, Ipomoea pandurata, Itea virginica, Juglans cinerea, Juglans nigra, Kalmia angustifolia, Kalmia latifolia, Kosteletzkya virginica, Krigia biflora, Krigia virginica, Lactuca biennis, Lactuca Canadensis, Lactuca hirsute, Laportea Canadensis, Lathyrus palustris, Lathyrus venosus, Lechea minor, Lechea mucronata, Lechea racemulosa, Leiophyllum buxifolium, Lepidium densiflorum, Lepidium virginicum, Lespedeza angustifolia, Lespedeza capitata, Lespedeza frutescens, Lespedeza hirta, Lespedeza repens, Lespedeza stuevei, Lespedeza violacea, Lespedeza virginica, Liatris pilosa, Liatris spicata, Limosella australis, Lindera benzoin, Lindernia dubia, Linum intercursum, Linum striatum, Linum virginianum, Liquidambar styraciflua, Liriodendron tulipifera, Lobelia canbyi, Lobelia cardinalis, Lobelia inflate, Lobelia nuttallii, Lobelia spicata, Ludwigia alternifolia, Ludwigia hirtella, Ludwigia palustris, Ludwigia sphaerocarpa, Lupinus perennis, Lycopus americanus, Lycopus amplectens, Lycopus rubellus, Lycopus uniflorus, Lycopus virginicus, Lyonia ligustrina, Lyonia mariana, Lysimachia ciliate, Lysimachia hybrid, Lysimachia quadrifolia, Lysimachia terrestris, Lysimachia thyrsiflora, Magnolia tripetala, Magnolia virginiana, Melampyrum lineare, Menispermum canadense, Mentha Ã-piperita, Mentha arvensis, Menyanthes trifoliate, Micranthemum micranthemoides, Mikania scandens, Mimulus alatus, Mimulus ringens, Minuartia caroliniana, Mirabilis nyctaginea, Mitchella repens, Moehringia lateriflora, Mollugo verticillata, Monarda punctata, Monotropa hypopithys, Monotropa uniflora, Morella caroliniensis, Morella cerifera, Morella pensylvanica, Morus rubra, Myosotis laxa, Myosotis verna, Myrica gale, Myriophyllum humile, Myriophyllum pinnatum, Myriophyllum tenellum, Nelumbo lutea, Nuphar lutea, Nuttallanthus Canadensis, Nymphaea odorata, Nyssa sylvatica, Obolaria virginica, Oclemena nemoralis, Oenothera biennis, Oenothera fruticosa, Oenothera laciniata, Oenothera perennis, Oldenlandia uniflora, Oligoneuron rigidum, Onosmodium virginianum, Opuntia humifusa, Orthilia secunda, Osmorhiza claytonia, Osmorhiza longistylis, Oxalis dillenii, Oxalis stricta, Oxypolis rigidior, Packera aurea, Packera obovata, Packera paupercula, Panax trifolius, Paronychia Canadensis, Paronychia fastigiata, Parthenocissus quinquefolia, Pedicularis Canadensis, Pedicularis lanceolata, Penstemon hirsutus, Penstemon laevigatus, Penthorum sedoides, Phlox divaricata,*

*Phlox maculate, Phlox pilosa, Phlox subulata, Phoradendron leucarpum, Photinia floribunda, Photinia melanocarpa, Photinia pyrifolia, Phryma leptostachya, Physalis heterophylla, Physalis longifolia, Physalis pubescens, Physocarpus opulifolius, Phytolacca Americana, Pilea Fontana, Pilea pumila, Plantago aristata, Plantago pusilla, Plantago virginica, Platanus occidentalis, Pluchea foetida, Podophyllum peltatum, Polemonium reptans, Polygala brevifolia, Polygala cruciata, Polygala incarnate, Polygala lutea, Polygala mariana, Polygala nuttallii, Polygala polygama, Polygala sanguine, Polygala senega, Polygala verticillata, Polygonella articulate, Polygonum amphibium, Polygonum arifolium, Polygonum careyi, Polygonum erectum, Polygonum hydropiperoides, Polygonum lapathifolium, Polygonum pensylvanicum, Polygonum punctatum, , Polygonum robustius, Polygonum sagittatum, Polygonum tenue, Populus grandidentata, Populus tremuloides, Potentilla arguta, Potentilla Canadensis, Potentilla norvegica, Potentilla simplex, Prenanthes altissima, Prenanthes autumnalis, Prenanthes serpentaria, Prenanthes trifoliolata, Proserpinaca intermedia, Proserpinaca palustris, Proserpinaca pectinata, Prunella vulgaris, Prunus Americana, Prunus angustifolia, Prunus maritime, Prunus pumila, Prunus serotina, Pseudognaphalium helleri, Pseudognaphalium obtusifolium, Ptilimnium capillaceum, Pycnanthemum clinopodioides, Pycnanthemum incanum, Pycnanthemum muticum, Pycnanthemum tenuifolium, Pycnanthemum verticillatum, Pycnanthemum virginianum, Pyrola Americana, Pyrola chlorantha, Pyrola elliptica, Pyxidanthera barbulata, Quercus alba, Quercus coccinea, Polygonum pensylvanicum, Polygonum punctatum, Polygonum robustius, Polygonum sagittatum, Polygonum tenue, Populus grandidentata, Populus tremuloides, Potentilla arguta, Potentilla Canadensis, Potentilla norvegica, Potentilla simplex, Prenanthes altissima, Prenanthes autumnalis, Prenanthes serpentana, Prenanthes trifoliolata, Proserpinaca intermedia, Proserpinaca palustris, Proserpinaca pectinata, Prunella vulgaris, Prunus Americana, Prunus angustifolia, Prunus maritime, Prunus pumila, Prunus serotina, Pseudognaphalium helleri, Pseudognaphalium obtusifolium, Ptilimnium capillaceum, Pycnanthemum clinopodioides, Pycnanthemum incanum, Pycnanthemum muticum, Pycnanthemum tenuifolium, Pycnanthemum verticillatum, Pycnanthemum virginianum, Pyrola Americana, Pyrola chlorantha, Pyrola elliptica, Pyxidanthera barbulata, Quercus alba, Quercus coccinea, Quercus ilicifolia, Quercus marilandica, Quercus michauxii, Quercus palustris, Quercus phellos, Quercus prinoides, Quercus prinus, Quercus rubra, Quercus stellata, Ranunculus ambigens, Ranunculus hispidus, Ranunculus longirostris, Ranunculus pensylvanicus, Ranunculus pusillus, Ranunculus recurvatus, Ranunculus sceleratus, Ranunculus trichophyllus, Rhexia mariana, Rhexia virginica, Rhododendron maximum, Rhododendron periclymenoides, Rhododendron prinophyllum, Rhododendron viscosum, Rhus copallinum, Rhus glabra, Rhus typhina, Ribes americanum, Robinia pseudoacacia, Robinia viscose, Rorippa palustris, Rosa Carolina, Rotala ramosior, Rubus Canadensis, Rubus cuneifolius, Rubus flagellaris, Rubus hispidus, Rubus occidentalis, Rudbeckia hirta, Rudbeckia laciniata, Rumex altissimus, Rumex orbiculatus, Sabatia angularis, Sabatia difformis, Sagina decumbens, Salix bebbiana, Salix discolor, Salix eriocephala, Salix humilis, Salix interior, Salix nigra, Salix petiolaris, Salix sericea, Salvia lyrata, Sanguinaria Canadensis, Sanguisorba Canadensis, Sanicula Canadensis, Sanicula marilandica, Sarracenia purpurea, Saururus cernuus, Saxifraga pensylvanica, Saxifraga virginiensis, Schwalbea Americana, Scrophularia lanceolata, Scrophularia marilandica, Scutellaria elliptica, Scutellaria galericulata, Scutellaria integrifolia, Scutellaria lateriflora, Senna hebecarpa, Sericocarpus asteroids, Sericocarpus linifolius, Sicyos angulatus, Sida spinosa, Silene antirrhina, Silene stellata, Sium suave, Solanum carolinense, Solanum ptycanthum, Solanum rostratum, Solidago bicolor, Solidago caesia, Solidago erecta, Solidago fistulosa, Solidago flexicaulis, Solidago gigantean, Solidago juncea, Solidago latissimifolia, Solidago nemoralis, Solidago odora, Solidago patula, Solidago puberula, Solidago rugosa, Solidago sempervirens, Solidago stricta, Solidago uliginosa, Solidago ulmifolia, Spergularia salina, Spiraea alba, Stachys hyssopifolia, Stachys palustris, Stachys tenuifolia, Staphylea trifolia, Stellaria longifolia, Stellaria pubera, Strophostyles helvola, Strophostyles umbellate, Stylosanthes biflora, Symphyotrichum cordifolium, Symphyotrichum dumosum, Symphyotrichum ericoides, Symphyotrichum leave, Symphyotrichum lanceolatum, Symphyotrichum lateriflorum, Symphyotrichum novi-belgii, Symphyotrichum patens, Symphyotrichum pilosum, Symphyotrichum puniceum, Symphyotrichum subulatum, Symphyotrichum undulatum, Teucrium canadense, Thalictrum pubescens, Thalictrum revolutum, Thalictrum thalictroides, Thaspium barbinode, Thaspium trifoliatum, Tilia Americana, Toxicodendron pubescens, Toxicodendron radicans, Toxicodendron vernix, Triadenum virginicum, Trichostema brachiatum, Trichostema dichotomum, Trichostema setaceum, Trientalis borealis, Triodanis perfoliata, Ulmus Americana, Ulmus rubra, Utricularia geminiscapa, Utricularia gibba, Utricularia intermedia, Utricularia juncea, Utricularia macrorhiza, Utricularia purpurea, Utricularia radiate, Utricularia striata, Utricularia subulata, Vaccinium angustifolium, Vaccinium corymbosum, Vaccinium fuscatum, Vaccinium macrocarpon, Vaccinium stamineum, Valerianella umbilicata, Verbena hastate, Verbena simplex, Verbena urticifolia, Verbesina alternifolia, Veronica anagallis-aquatica, Veronica peregrine, Veronica scutellata, Veronicastrum virginicum, Viburnum acerifolium, Viburnum dentatum, Viburnum nudum, Viburnum prunifolium, Viola Ã-palmate, Viola affinis, Viola bicolor, Viola blanda, Viola brittoniana, Viola cucullata, Viola hirsutula, Viola labradorica, Viola lanceolata, Viola macloskeyi, Viola pedata, Viola pubescens, Viola sagittata, Viola triloba, Vitis aestivalis, Vitis labrusca, Vitis riparia, Vitis vulpine, Xanthium strumarium, and Zizia aptera.*

In another embodiment, the use of the present invention is effective against dicotyledonous weeds selected from Cirsium arvense, Taraxacum officinale, Ranunculus repens, Senecio vulgaris, Papaver rohoeas, Veronica persica, Matricaria sp., Fallopia Convolvulus, Veronica arvensis, Veronica hederofolia, Stellaria media and Polygonum convolvulus.

A herbicidal composition comprising D Napropamide and agronomically acceptable excipients is described herein. These compositions were found useful in the practice of the enhanced use of the present invention. The agronomically acceptable excipients may be selected from carriers, inert materials, organic or inorganic solvents, minerals, mixed solvents, wetting agents and/or emulsifying agents, adhesive agents, anti-caking agents, deflocculating agents, and the like. The herbicidal composition may be formulated in the form of solid and liquid formulations.

Following the finding of the present invention that D-Napropamide has enhanced activity specifically against dicotyledonous weeds, it is possible to formulate the herbicide such that it is active in controlling dicotyledonous weeds, yet is less active (preferably substantially inactive) against monocotyledonous plant species. Accordingly, in a preferred embodiment of the use of D-Napropamide for the control of a dicotyledonous weed at a locus, the D-Napropamide is applied in an amount such that it is effective in controlling said dicotyledonous weed, yet is less active (preferably substantially inactive) against monocotyledonous plant species.

Typically, said monocotyledonous plant species may be a crop plant.

In this embodiment, the activity of the D-Napropamide against the monocotyledonous plant species is typically such that the mean final foliar fresh weight of the monocotyledonous plant species 21 days after application of the D-Napropamide is 70% or more, more typically 80% or more, preferably 90% or more, than the weight obtained with untreated plants.

The compound Napropamide-M is known in the art and can be prepared by any of the known methods such as the one disclosed in WO2009004642.

The invention will now be explained in more detail in the following examples that illustrate, but are not intended to limit, the invention.

**EXAMPLES:**

Field trials were conducted on various moncotyledonous weeds and dicotyledonous weeds and the effect of D-isomer of Napropamide was studied to understand the selective and effective control of dicotyledonous weeds over monocotyledonous weeds. The effect of D-isomer of Napropamide in comparison to racemic napropramide and untreated was studied, which is concluded hereinbelow:

**STATISTICAL ANALYSIS MODEL:**

Several small plot replicated trials were carried out to evaluate and/or compare the efficacy of D-Napropamide against a range of indicated annual broadleaved and grass weed species in the indicated crops. No problems were encountered during mixing or application of any of the product formulations or tank mixtures under test.

In each of the reported data, the homogeneity of variance was tested by Bartlett's test. Wherever this test indicated no homogeneity of variance, the transformed values were used for analysis of variance. Assessment data was then analyzed using a two-way analysis of variance (ANOVA) on untransformed and transformed data. The probability of no significant differences occurring between treatment means was calculated as the F probability value (p(F)). A mean comparison test was only performed and reported when the treatment of F that was calculated during analysis of variance was significant at the observed significance level specified for the mean comparison test. Where the data was transformed, treatment means in the reports were presented in their detransformed state, with the appropriate letter test and mean descriptions (LSD and standard deviation) derived from the transformed ANOVA.

**Example 1: Controlled Trial:** Comparative effect of D- isomer of Napropamide and Napropamide for controlling *Stellaria media* (dicot weed) *and Poa annua* (monocot weed)

A study was carried out to determine the relative biological activity of the D and L isomers of Napropamide when applied pre-emergence to one monocotyledon and one dicotyledon species. Napropamide, containing 450 grams active substance per litre (g a.s./L) formulated as a suspension concentrate and the D-isomer of Napropamide (1000 g a.s./L) were applied at a range of concentrations from 0.1575 to 1.26 kilograms of active substance per hectare (kg a.s/Ha).

EC50 values in kg a.s./Ha were calculated from the dose response data using final foliar fresh weight data for each species and was used to determine the relative biological activity of the D and L isomers of Napropamide. The methodology was based on the OECD guideline 2008, according to the revision of July 2006 for seedling emergence and growth. The study was conducted to GLP standards.

Seeds were sown directly into non-porous plastic pots containing the following mix of soil: 10 L of sterile loam + 4 L of coarse grit (washed quartztite, nominal 4 mm) + 10 L of sand. This soil mix was characterized as a sandy loam with an organic carbon content of 1.5% and pH of 7.2. Details of the plant species, number of seeds per pot and pot size are shown below. All seeds were sown 1-2 cm deep.

**Details of plant species**

| Weed type | Species | Common name | Variety (Source) | Seeds/pot | Pot size |
|---|---|---|---|---|---|
| Monocotyledon | Poa annua | Meadow grass | Herbiseed | 4 | 7 X 7 X 8 cm |
| Dicotyledon | Stellaria media | Chickweed | Herbiseed | 6 | 7 X 7 X 8 cm |

The highest concentration of Napropamide was prepared by measuring a calculated volume by weight and diluting with tap water to the full required volume. Lower concentrations were prepared by serial dilution with water. D-Napropamide was prepared by dissolving the calculated weight in acetone and adding water to give the full required volume in 50:50 acetone + water. Lower concentrations were prepared by serial dilution with 50:50 acetone + water. D-Napropamide dissolved completely.

**Preparation of the Highest Rate Spray Solutions for *Poa annua***

| Test item | Active Ingredient | Rate | Application volume | Amount weighed | Volume prepared |
|---|---|---|---|---|---|
| Napropamide | 450 g as/L | 1.26 kg as/L | 193.12 L/Ha | 6.321 g | 400 mL (water) |
| D Napropamide | 1000 g as/kg | 1.26 kg as/L | 193.12 L/Ha | 2.611 g | 400 mL (acetone +water) |

**Preparation of Highest Rate Spray Solutions for *Stellaria media***

| Test item | Active ingredient | Rate | Application volume | Amount weighed | Volume prepared |
|---|---|---|---|---|---|
| Napropamide | 450 g as/L | 1.26 kg as/L | 196.17 L/Ha | 6.223 g | 400 mL (water) |
| D Napropamide | 1000 g as/kg | 1.26 kg as/L | 196.17 L/Ha | 2.569 g | 400 mL (acetone +water) |

The sprayer was calibrated within 24 hours prior to application by weight of 15 applications of water to six 86 mm ID petri dishes. The total weight of water over a known area enabled a simple calculation giving the volume rate to be made. The volume rate achieved was within the range specified in the study plan (200 L/Ha ± 10%).

Replication was 5 pots per treatment for each plant species. After application, pots were placed on the bench in glasshouse in randomized blocks. Plants were assessed for emergence, mortality and visual injury (expressed as a percentage of the untreated control: 0% = no injury, 1-39% = slight injury, 40 - 69% = moderate injury, 70 - 99% = severe injury and 100% = all plants dead) at 14 and 21 days after 50% emergence in the untreated controls. Fresh weights (biomass above soil level) were also recorded 21 days after 50% emergence in the untreated controls. Plants were fully turgid at the time of harvest.

*1. Mean final foliar fresh weights (g)*

| Treatment | Rate (kg/Ha) | Poa annua | Stellaria media |
|---|---|---|---|
| Untreated | Acetone + Water | 0.90 | 1.44 |
| D-Napropamide | 0.1575 | 0.93 | 0.498 |

(continued)

| Treatment | Rate (kg/Ha) | Poa annua | Stellaria media |
|---|---|---|---|
| D-Napropamide | 0.315 | 0.64 | 0.198 |
| D-Napropamide | 0.63 | 0.45 | 0.17 |
| Napropamide | 0.315 | 0.57 | 0.3 |
| Napropamide | 0.63 | 0.98 | 0.328 |

D-Napropamide demonstrates distribution of enhanced activity towards control of dicot weed vis-à-vis only a moderate selectivity towards monocot weed in comparison with Napropamide.

*2. Mean final foliar fresh weights expressed as percentage of untreated controls:*

| Treatment | Rate (kg/Ha) | *Poa annua* | *Stellaria media* |
|---|---|---|---|
| Untreated | Acetone + Water | 100 | 100 |
| d-Napropamide | 0.1575 | 100 | 35 |
| d-Napropamide | 0.315 | 71 | 14 |
| d-Napropamide | 0.630 | 50 | 12 |
| Napropamide | 0.1575 | 100 | 70 |
| Napropamide | 1.26 | 23 | 16 |

D-Napropamide demonstrates distribution of enhanced activity towards control of dicot weed vis-à-vis only a moderate selectivity towards monocot weed in comparison with Napropamide.

Assessment data was recorded on pro-forma sheets and entered into Gylling ARM 7 software. EC50 values were calculated using audited means data from the final assessments (21 day). Gylling ARM 7.0 software used a simple probit- maximum likelihood estimation method with 99% confidence level. The EC50 values generated were then visually checked against the means data table to verify they appeared correct.

**$EC_{50}$ values in kg as/ha based on the final fresh weights**

| Type of weed | Species | Common name | $EC_{50}$ (kg/Ha) | |
|---|---|---|---|---|
| Monocot | Poa annua | Meadow grass | d-Napropamide | 0.44 |
| | | | l-Napropamide | ≻ 1.26 |
| | | | Napropamide | 0.72 |
| Dicot | Stellaria media | Chickweed | d-Napropamide | 0.054 |
| | | | L-Napropamide | 1.26 |
| | | | Napropamide | 0.22 |

Conclusion: D - Napropamide demonstrates distribution of enhanced activity towards control of dicot weed vis-à-vis only a moderate selectivity towards monocot weed in comparison with Napropamide. D-Napropamide was found about 1.63 times more active than racemic Napropamide and 2.86 more active than L-Napropamide in monocotyledonous weeds. Surprisingly, D-Napropamide was found to be about 4.07 times more active than racemic Napropamide and 23.33 times more active than L-Napropamide in dicotyledonous weeds. The degree of enhancement in efficacy seen over racemic Napropamide and L-Napropamide towards the control of dicotyledonous weeds was surprising. Equally

surprising was a clear trend of differentiated selectivity of D-Napropamide towards the control of dicotyledonous weeds vis-à-vis the control of monocotyledonous weeds.

**Example 2:** Selectivity of D- Napropamide for controlling *Ranunculus repens. Senecio vulgaris and Papaver rhoeas* (dicotyledonous weed) in strawberry farm:

Trial was carried out on strawberries to evaluate the efficacy and selectivity of D-Napropamide and equivalent rate of Devrinol (Napropramide) applied pre-emergence. Efficacy was assessed visually after the emergence of significantly new growth in untreated plot. The percentage control of D- isomer of Napropamide and Devrinol was assessed in comparison to the untreated after 224 days after application.

**Table 2:** Mean Percentage Control of *Ranunculus repens* (dicotyledonous weed)

| S No. | Treatment | Percentage Control at 224 DAA | Treatment | Percentage Control at 224 DAA |
|---|---|---|---|---|
| 1 | Untreated | 0.00 | | |
| 2 | Napropamide 5 L/Ha | 33.3 | D-Napropamide 3.0 L/Ha | 66.7 |
| 3 | Napropamide 7 L/Ha | 66.7 | D-Napropamide 4.2 L/Ha | 100 |
| 4 | Napropamide 14 L/Ha | 83.3 | D-Napropamide 8.5 L/Ha | 100 |
| LSD (P=0.5) | 4.640 | | | |
| SD | 3.179 | | | |
| • The tested formulations contained 450 g/L of Napropamide and Napropamide-M respectively. | | | | |

Conclusion: D - Napropamide demonstrated surprising efficacy in the control of Ranunculus repens vis-à-vis the control achieved by Napropamide at an equivalent dosage.

**Table 3:** Mean Percentage Control of *Senecio vulgaris:*

| S No. | Treatment | Percentage Control at 70 DAA | Treatment | Percentage Control at 70 DAA |
|---|---|---|---|---|
| 1 | Untreated | 0.00 | | |
| 2 | Napropamide 5 L/Ha | 37.5 | D-Napropamide 3.0 L/Ha | 75.0 |
| 3 | Napropamide 7 L/Ha | 25.0 | D-Napropamide 4.2 L/Ha | 50.0 |
| 4 | Napropamide 14 L/Ha | 12.5 | D-Napropamide 8.5 L/Ha | 75.0 |
| • The tested formulations contained 450 g/L of Napropamide and Napropamide-M respectively. | | | | |

Conclusion: D - Napropamide demonstrated surprising efficacy in the control of Senecio vulgaris, a dicotyledonous weed, vis-à-vis the control achieved by Napropamide at an equivalent dosage.

**Table 4:** Mean Percentage Control of *Papaver rhoeas:*

| S No. | Treatment | Percentage Control at 70 DAA | Treatment | Percentage Control at 70 DAA |
|---|---|---|---|---|
| 1 | Untreated | 0.00 | | |
| 2 | Napropamide 5 L/Ha | 62.5 | D-Napropamide 3.0 L/Ha | 71.7 |

(continued)

| S No. | Treatment | Percentage Control at 70 DAA | Treatment | Percentage Control at 70 DAA |
|---|---|---|---|---|
| 3 | Napropamide 7 L/Ha | 81.7 | D-Napropamide 4.2 L/Ha | 95.0 |
| 4 | Napropamide 14 L/Ha | 82.5 | D-Napropamide 8.5 L/Ha | 97.5 |
| • The tested formulations contained 450 g/L of Napropamide and Napropamide-M respectively. | | | | |

Conclusion: D - Napropamide demonstrated surprising efficacy in the control of Papaver rhoeas vis-à-vis the control achieved by Napropamide at an equivalent dosage.

**Example 3:** Selectivity of D- isomer of Napropamide for controlling annual broadleaved and grass weed species in Winter Oilseed Rape:

Trials were conducted to evaluate the selectivity and efficacy of D- isomer of Napropamide when applied pre-emergence to oilseed rape crop. The % control of weed was assessed at regular intervals.

**Table 5:** Mean Percentage Control of *Aperaspica-venti* (Monocot Weed)

| S No. | Treatment | Percentage Control at 63 DAA | Treatment | Percentage Control at 63 DAA |
|---|---|---|---|---|
| 1 | Untreated | 0.00 | | |
| 2 | D Napropamide 450 g/L @ 1.4 L/Ha | 35.00 | Napropamide 1.6 L/Ha | 40.00 |
| 3 | D Napropamide 450 g/L @ 1.6 L/Ha | 52.50 | Napropamide 2.8 L/Ha | 76.25 |
| 4 | D-Napropamide 450 g/L @ 1.6 L/Ha | 58.75 | Napropamide 2.8 L/Ha | 67.50 |
| I LSD (P=0.5) | 10.367 | | | |
| The tested formulations contained 450 g/L of Napropamide and Napropamide-M respectively. | | | | |

Conclusion: D - Napropamide demonstrates poor efficacy in the control of Aperaspica-venti, a monocot weed, vis-à-vis the control achieved by Napropamide at an equivalent dosage.

**Table 6:** Mean Percentage Control of *Veronica persica* (dicot weed)

| S No. | Treatment | Percentage Control at 63 DAA | Treatment | Percentage Control at 63 DAA |
|---|---|---|---|---|
| 1 | Untreated | 0.00 | | |
| 2 | D Napropamide 450 g/L @ 1.4 L/Ha | 100.00 | Napropamide 1.6 L/Ha | 75.00 |
| 3 | D Napropamide 450 g/L @ 1.6 L/Ha | 100.00 | Napropamide 2.8 L/Ha | 75.00 |
| LSD (P=0.5) | 10.367 | | | |
| • The tested formulations contained 450 g/L of Napropamide and Napropamide-M respectively. | | | | |

Conclusion: D - Napropamide demonstrates superior efficacy in the control of *Veronica persica,* a dicot weed,

vis-à-vis the control achieved by Napropamide at an equivalent dosage.

**Table 7:** Mean Percentage Control of *Triticum aestivum* (monocot weed).

| Sr No. | Treatment | Percentage Control at 51 DAA | Treatment | Percentage Control at 72 DAA |
|---|---|---|---|---|
| 1 | Untreated | 0.00 | | |
| 2 | D Napropamide 450g/L @ 1.4 L/Ha | 0.00 | D Napropamide 450 g/L @ 1.4 L/Ha | 0.00 |
| 3 | D Napropamide 450g/L @ 1.6 L/Ha | 0.00 | D Napropamide 450 g/L @ 1.6 L/Ha | 0.00 |
| 4 | D-Napropamide 450 g/L @ 1.8 L/Ha | 0.00 | D-Napropamide 450 g/L @ 1.8 L/Ha | 0.00 |
| 5 | D-Napropamide 450 g/L @ 2.0 L/Ha | 0.00 | D-Napropamide 450 g/L @ 2.0 L/Ha | 0.00 |
| LSD (P=0.5) | 0.000 | | | |
| SD | 0.000 | | | |

Conclusion: D - Napropamide demonstrates negligible control of *Triticum aestivum,* a monocot weed.

**Table 8:** Mean Percentage Control of *Cirsium arvense.*

| S No. | Treatment | Percentage Control at 51 DAA | | |
|---|---|---|---|---|
| 1 | Untreated | 0.00 | | |
| 2 | D Napropamide 450 g/L @ 1.6 L/Ha | 100.00 | Napropamide 450 g/L @ 2.8 L/Ha | 20.00 |

Conclusion: D - Napropamide demonstrates superior control of Cirsium arvense, a dicot weed vis-à-vis a negligible control of the same weed with an equivalent dosage of Napropamide.

**Table 9:** Mean Percentage Control of *Senecio Vulgaris*:

| S No. | Treatment | Percentage Control at 214 DAA | Treatment | Percentage Control at 63 DAA |
|---|---|---|---|---|
| 1 | Untreated | 0.00 | | |
| 2 | D Napropamide 450 g/L @ 1.6 L/Ha | 94.72 | Napropamide 450 g/L @ 1.6 L/Ha | 36.96 |
| 3 | D Napropamide 450 g/L @ 1.6 L/Ha | 82.15 | Napropamide 450 g/L @ 2.8 L/Ha | 4.65 |
| LSD (P=0.5) | 23.282 | | | |
| SD | 16.046 | | | |

Conclusion: D - Napropamide demonstrates superior efficacy in the control *of Senecio vulgaris,* a dicot weed, vis-à-vis the control achieved by Napropamide at an equivalent dosage.

**Table 10:** Mean Percentage Control of *Matricaria sp.*

| S No. | Treatment | Percentage Control at 49 DAA | Treatment | Percentage ground cover % |
|---|---|---|---|---|
| 1 | Untreated | 0.00 | Untreated | 4.50 (0.0%) |
| 2 | D Napropamide 450 g/L @ 2.0 L/Ha | 97.00 | D Napropamide 450 g/L @ 2.0 L/Ha | 0.30 (99.3%) |
| 3 | Napropamide 450 g/L @ 2.8 L/Ha | 61.25 | Napropamide 450 g/L @ 2.8 L/Ha | 2.13 (52.8%) |
| LSD (P=0.5) | 24.514 | | 1.189 | |
| SD | 16.862 | | 0.818 | |

Conclusion: D - Napropamide demonstrates superior efficacy in the control of *Matricaria sp*., a dicot weed, vis-à-vis the control achieved by Napropamide at an equivalent dosage.

**Table 11:** Mean Percentage Control of *Fallopia convolvulus* (a dicot weed):

| S No. | Treatment | Percentage Control at 63 DAA | Treatment | Percentage control at 63 DAA |
|---|---|---|---|---|
| 1 | Untreated | 0.00 | Untreated | 0.00 |
| 2 | D Napropamide 450 g/L @ 2.0 L/Ha | 100.00 | Napropamide 450 g/L @ 1.6 L/Ha | 30.00 |
| 3 | D Napropamide 450 g/L @ 1.6 L/Ha | 100.00 | Napropamide 450 g/L @ 2.8 L/Ha | 0.00 |

Conclusion: D - Napropamide demonstrates superior efficacy in the control *of Fallopia convolvulus.,* a dicot weed, vis-à-vis the control achieved by Napropamide at an equivalent dosage.

**Example 4:** Effect of D- isomer of Napropamide for controlling *Digitaria sanguinalis* (monocot weed)

A plot with 20% density of *Digitaria sanguinalis* (monocot weed) was treated with D-Napropamide and Racemic Napropamide formulations containing 450 g/L active ingredient and the activity was noted after 60 days of application.

**Table 12:** Mean Percentage Control of *Digitaria sanguinalis*:

| S No. | Treatment | % Control | % Control |
|---|---|---|---|
| | Treatment evaluation interval | 16 DAA | 33 DAA |
| | BBCH Weed | 12 | 21 |
| | Groundcover (%) weed | 4.75 | 7.00 |
| 1 | D Napropamide 3 L/Ha | 7.50 | 8.75 |
| 2 | D Napropamide 4.5 L/Ha | 10.00 | 10.00 |
| 3 | D Napropamide 6 L/Ha | 10.00 | 12.50 |
| 4 | D Napropamide 7.5 L/Ha | 10.00 | 11.25 |
| 5 | D Napropamide 9 L/Ha | 10.00 | 18.75 |
| 6 | Napropamide 9 L/Ha | 12.50 | 15.00 |
| LSD (P=0.05) | | 4.675 | 4.682 |
| Std. Dev. | | 3.162 | 3.107 |
| CV | | 31.62 | 24.45 |

Conclusion: D - Napropamide is only as efficacious or less in comparison to Napropamide in the control of monocotyledonous weeds.

**Synergy studies:**

Studies were conducted to compare the weed controlling activity of the combination of D-Napropamide with various herbicides and compare its observed efficacy with the "expected" efficacy when D-Napropamide and select individual herbicides were used to treat monocotyledonous weeds. Any difference between the observed and "expected" efficacy could be attributed to synergy between the two compounds in the control of monocotyledonous weeds. The expected efficacy of a combination of D-Napropamide with select herbicides was calculated using the well-established Colby method.

In the Colby method, the expected (or predicted) response of a combination of herbicides is calculated by taking the product of the observed response for each individual component of the combination when applied alone divided by 100 and subtracting this value from the sum of the observed response for each component when applied alone. An unexpected enhancement in efficacy of the combination is then determined by comparing the observed response of the combination to the expected (or predicted) response as calculated from the observed response of each individual component alone. If the observed response of the combination is greater than the expected (or predicted) response, or stated conversely, if the difference between the observed and expected response is greater than zero, then the combination is said to be synergistic or unexpectedly effective. (Colby,S. R., Weeds, 1967(15), p. 20-22) The Colby method requires only a single dose of each herbicide applied alone and the mixture of both doses. The formula used to calculate the expected efficacy (EE) which was compared with the observed efficacy (OE) to determine the efficacy of the present invention is explained hereinbelow:

$$EE=(B\ efficacy + A\ efficacy - (B\ efficacy \times A\ efficacy)/100)$$

The weed control activity of the individual herbicides of the invention and their combinations were evaluated on monocot weeds such as *Digitaria sanguinalis* (Weed code-DIGSA), Apera spica-venti (Weed code- APESV), *Triticum aestivum* (Weed code - TTTT), Poa *annua* (Weed code- POAAN) and *Alopecurus myosuroides* (Weed code ALOMY). The trial was carried out in Randomized Complete Block (RCB) method, all field trials was conducted using this method. Each trial were replicated four times and conducted under GEP guidelines. Application volume was 300 L/ha, mixture size was 2.16 litres. Such field trials were carried out at three locations so as to generate independent data, the locations were chosen randomly across European nations. D-Napropamide was sprayed as 450 SC, whereas second selected herbicides were sprayed according to their recommended dosage.

**Example 5:**

**Trial 1:**

Colby's formula was applied to analyze results of the combination of D-Napropamide + Clomazone. The combination was tested on POAAN and APESV weeds and the results are reproduced in the table below. The numbers in brackets denote the actual weed counts.

| Sr. | Dose | | % Weed control | | | |
|---|---|---|---|---|---|---|
| | | | APESV (untreated = 18.5 plants) | | ALOMY (untreated = 2.8 plants) | |
| | Active | Rate Unit | Expected | Actual | Expected | Actual |
| 1 | D-Napropamide 450 SC | 2 l | - | (2.3)88 | - | (0.3) 91 |
| 2 | Clomazone 360 CS | 0.2 l | - | (18.0) 3.0 | - | (2.0) 27.0 |
| 3 | D-Napropamide + Clomazone 360 CS | 2l + 0.2 l | 88.36 | (0.0) 100 | 93.43 | (0.0) 100 |
| Observed - Expected efficacy | | | + 11.64 | | + 6.57 | |

**Trail 2:**

In trial 2, the combination of D-Napropamide with clomazone was tested for synergistic herbicidal enhancement on the weeds ALOMY and POAAN. The weeds were selected due to their infestation in the field selected for the trial. The results of this second trial are tabulated below:

| Sr. | Dose | | % Weed control | | | |
|---|---|---|---|---|---|---|
| | | | POAAN (untreated = 14.8 plants) | | ALOMY (untreated = 2.5 plants) | |
| | Active | Rate Unit | Expected | Actual | Expected | Actual |
| 1 | D-Napropamide 450 SC | 2 l | - | (2.5) 83 | - | (0.5) 80 |
| 2 | Clomazone 360 CS | 0.2 l | - | (13.0)12 | - | (2.3) 10 |
| 3 | D-Napropamide + Clomazone 360 CS | 2l + 0.2 l | 85.4 | (4.3) 71 | 82 | (0.0) 100 |
| Observed - Expected efficacy | | | - 14.4 | | + 18.0 | |

Weed control using a combination of D-Napropamide with Clomazone was found markedly superior to the weed control achieved with individual application of D-Napropamide and Clomazone in three out of four trials. Still more surprisingly, the expected efficacy and the actual observed efficacy of the combination in the control of Alopecurus myosuroides (ALOMY) and Apera spica-venti (APESV) was remarkably superior to the response from individual applications of D-Napropamide and Clomazone alone, demonstrating synergy.

**Example 6:**

Another trial was conducted on the combination of D-Napropamide in combination with S-Metolachlor on the control of various weeds. S-Metolachlor is a chloroacetanilide herbicide. The results of this trial are tabulated below:

**Trial 1:**

| Sr. | Dose | | % Weed control | | | |
|---|---|---|---|---|---|---|
| | | | ALOMY (untreated = 2.8 plants) | | POAAN (untreated = 23.3 plants) | |
| | Active | Rate Unit | Expected | Actual | Expected | Actual |
| 1 | D-Napropamide 450 SC | 2 l | - | (0.3) 91 | | (4.8) 80 |
| 2 | S-Metolachlor 960 EC | 1 l | - | (2.5) 9 | - | (5.0) 78 |
| 3 | D-Napropamide + S-Metolachlor 960 EC | 2l + 1 l | 91.81 | (0.0) 100 | 95.6 | (1.0) 96 |
| Observed efficacy - expected efficacy | | | | + 8.19 | | + 0.4 |

**Trial 2:**

In trial 2, the combination of D-Napropamide with S-Metolachlor was tested for synergistic herbicidal enhancement on the weeds ALOMY and POAAN. The weeds were selected due to their infestation in the field selected for the trial. The results of this trial are tabulated below:

| Sr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 1 | D-Napropamide 450 SC | 2 l | - | (0.5) 80 | | (2.5) 83 |
| 2 | S-Metolachlor 960 EC | 1 l | - | (1.3) 50 | - | (3.3) 78 |
| 3 | D-Napropamide + S-Metolachlor 960 EC | 2l + 1 l | 90 | (0.0) 100 | 96.24 | (0.5) 97 |
| Observed efficacy - expected efficacy | | | | + 10.0 | | + 0.76 |

The observed efficacy in each case was greater than the expected response calculated using the Colby method. S-Metolachlor + D-Napropamide was thus remarkably superior to the expected response and was thus synergistic. S-Metolachlor being a chloroacetanilide herbicide, it could be reasonably predicted that other chloroacetanilide herbicides would also demonstrate a similar synergistic correlation with D-Napropamide.

**Example 7:**

Another trial was conducted to check weed activity of the combination of D-Napropamide and Pendimethalin. The results of this trial are tabulated below:

**Trial 1:**

| Sr. | Dose | | % Weed control | | | |
|---|---|---|---|---|---|---|
| | | | ALOMY (untreated = 2.8 plants) | | APESV (untreated = 18.5 plants) | |
| | Active | Rate Unit | Expected | Actual | Expected | Actual |
| 1 | D-Napropamide 450 SC | 2 l | - | (0.3) 91 | | (2.3) 88 |
| 2 | Pendimethalin 400 SC | 1 l | - | (1.0) 64 | - | (8.5) 54 |
| 3 | D-Napropamide + Pendimethalin 400 SC | 2l + 1 l | 96.76 | (0.0) 100 | 94.48 | (0.0) 100 |
| Observed efficacy - expected efficacy | | | | + 3.24 | | + 5.52 |

In **trial 2**, the combination of D-Napropamide and pendimethalin were tested at a different location concurrently with the first trial to corroborate the findings of the first trial. The weeds were selected in accordance with their incidence in the tested field. The results of this trial are summarized below:

| SSr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 11 | D-Napropamide 450 SC | 2 l | - | (0.5) 80 | | (2.5) 83 |
| 12 | Pendimethalin 400 SC | 1 l | - | (0.8) 70 | - | (13.8) 7 |

(continued)

| SSr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 33 | D-Napropamide + Pendimethalin 400 SC | 2l + 1 l | 94 | (0.0) 100 | 84.19 | (0.0) 100 |
| Observed efficacy - expected efficacy | | | | + 6.0 | | + 15.81 |

The results of trials 1 and 2 clearly establish the superior efficacy of D-Napropamide in combination with Pendimethalin. This superior efficacy can be attributed to synergism between the two compounds, not seen in the single individual applications. Pendimethalin being a dinitroaniline herbicide, it could be reasonably expected that other dinitroaniline herbicide would demonstrate a similar potentiation of the activity of D-Napropamide.

**Example 8:**

Tank mixtures of D-Napropamide and diflufenican were used to control monocotyledonous weeds. Field trials evaluated this mixture in comparison to each active ingredient alone and in a comparative tank mixture of these same active ingredients. The table below summarizes the results of this field trial:

**Trial 1:**

| Sr. | Dose | | % Weed control | | | |
|---|---|---|---|---|---|---|
| | | | ALOMY (untreated = 2.8 plants) | | APESV (untreated = 18.5 plants) | |
| | Active | Rate Unit | Expected | Actual | Expected | Actual |
| 1 | D-Napropamide 450 SC | 2 l/ha | - | (0.3) 91 | - | (2.3) 88 |
| 2 | Diflufenican 500 g/L | 0.4 l/ha | - | (1.5) 45 | - | (17.0) 8 |
| 3 | D-Napropamide + Diflufenican | 2l/ha + 0.4 l/ha | 95.05 | (0.0) 100 | 88.96 | (0.0) 100 |
| Observed efficacy - expected efficacy | | | + 4.95 | | + 11.04 | |

**Trial 2:**

In another trial at another location, the combination of D-Napropamide and diflufenican was evaluated for synergistic correlation to corroborate the findings of the first trials. The weeds were selected based on the most prevalent infestation present at the test site. The results of this trial are tabulated as hereunder

| Sr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 1 | D-Napropamide 450 SC | 2 l/ha | - | (0.5) 80 | - | (2.5) 83 |
| 2 | Diflufenican 500 g/L | 0.4 l/ha | - | (1.5) 40 | - | (13.0) 12 |

(continued)

| Sr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 3 | D-Napropamide + Diflufenican | 2l/ha + 0.4 l/ha | 88 | (0.0) 100 | 85.04 | (0.5) 97 |
| Observed efficacy - expected efficacy | | | + 12.0 | | + 11.96 | |

The trials 1 and 2 demonstrate the synergy between diflufenican and D-Napropamide in the control of monocot weeds. The observed efficacy in each case was greater than the expected response calculated using the Colby method. Diflufenican + D-Napropamide was thus remarkably superior to the expected response and was thus synergistic. Diflufenican being a representative anilide or pyridine herbicide, such synergy could be reasonably expected between D-Napropamide and other anilide or pyridine herbicides described in the present application

**Example 9:**

Tank mixtures of D-Napropamide and metribuzin (70% granules) were used to control monocotyledonous weeds. Field trials evaluated this mixture in comparison to each active ingredient alone and in a comparative tank mixture of these same active ingredients. The table below summarizes the results of this field trial:

**Trial 1:**

| Sr. | Dose | | % Weed control | | | |
|---|---|---|---|---|---|---|
| | | | APESV (untreated = 18.5 plants) | | POAAN (untreated = 23.3 plants) | |
| | Active | Rate Unit | Expected | Actual | Expected | Actual |
| 1 | D-Napropamide 450 SC | 2 l/ha | - | (2.3) 88 | - | (4.8) 80 |
| 2 | Metribuzin 70% WG | 0.25 kg/ha | - | (13.8) 26 | - | (23.8) -2 |
| 3 | D-Napropamide + Metribuzin | 2l/ha + 0.25 kg/ha | 93.12 | (0.0) 100 | 79.6 | (0.3) 99 |
| Observed efficacy - expected efficacy | | | + 6.88 | | + 19.4 | |

**Trial 2:**

In another trial at another location, the combination of D-Napropamide and metribuzin was evaluated for synergistic correlation to corroborate the findings of the first trials. The weeds were selected based on the most prevalent infestation present at the test site. The results of this trial are tabulated as hereunder:

| Sr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 1 | D-Napropamide 450 SC | 2 l/ha | - | (0.5) 80 | - | (2.5) 83 |
| 2 | Metribuzin 70% WG | 0.25 kg/ha | - | (1.8) 30 | - | (14.0) 5 |

(continued)

| Sr. | Dose | | % Weed control | | | |
|---|---|---|---|---|---|---|
| | | | ALOMY (untreated = 2.5 plants) | | POAAN (untreated = 14.8 plants) | |
| | Active | Rate Unit | Expected | Actual | Expected | Actual |
| 3 | D-Napropamide + Metribuzin | 2l/ha + 0.25 kg/ha | 86 | (0.0) 100 | 83.85 | (0.0) 100 |
| Observed efficacy - expected efficacy | | | + 14.0 | | + 16.15 | |

The trials 1 and 2 demonstrate the synergy between metribuzin and D-Napropamide in the control of monocot weeds. This superior efficacy is attributed to synergism between the two compounds. Metribuzin, being a representative triazinone herbicide, such synergy could be reasonably expected between D-Napropamide and other triazinone herbicides described in the present application.

**Example 10:**

Field trials were carried out to test the efficacy of the combination of D-Napropamide and Clomazone + Dimethachlor using tank mixtures of the individual compounds. The following table demonstrates the results of the field trials:

| Sr. | Dose | | % Weed control | |
|---|---|---|---|---|
| | | | TRZAW (untreated = plants) | |
| | Active | Rate Unit | Expected | Actual |
| 1 | D-Napropamide 450 SC | 1.2 l | - | 40 |
| 2 | Clomazone (500 g/L) + Dimethachlor (360 g/L) | 2l | - | 50 |
| 3 | D-Napropamide 450 SC Clomazone (500 g/L) + Dimethachlor (360 g/L) | 1.2l + 2l | 88 | 93 |
| 4 | Observed efficacy - expected efficacy | | + 5.0 | |

It was thus found that the combination of D-Napropamide + Clomazone + Dimethachlor was found to be synergistic wherein the observed efficacy against Tritium aestivum (TRZAW) was higher than the expected efficacy of the combination. The combination demonstrated synergistic correlation.

**Example 11:** Broad spectrum effect of D-napropramide and Clomazone on Dicot and monocot weeds:

The effect of combination of D-napropramide and Clomazone was tested in the field, post sowing of the seeds. The combination of D-napropramide and Clomazone was tested at different amounts on monocot and dicot weeds. The field was observed after 50 days, results of which are reproduced herein below:

| | | D-Napropramide( 450 g/L SC @ 1.7 l ) + Clomazone(360 g/L CS @ 0.25 l) (% control) | D-Napropramide (91 g/L MEC @ 8.41 l)+ Clomazone(360 g/L @ 0.25 l)(% control) |
|---|---|---|---|
| ALOMY ($19/m^2$)) | *Alopecurus myosuroides Huds (monocot)*; | 100 | 100 |
| LOLMU ($192/m^2$) | *Lolium multiflorum* Lam (monocot) | 100 | 100 |
| PAPRH ($15/m^2$) | *Papaver rhoeas* L | 100 | 100 |
| CENCY ($104/m^2$) | *Centaurea cyanus* L. (dicot) | 100 | 100 |

(continued)

| | | D-Napropramide( 450 g/L SC @ 1.7 l ) + Clomazone(360 g/L CS @ 0.25 l) (% control) | D-Napropramide (91 g/L MEC @ 8.41 l)+ Clomazone(360 g/L @ 0.25 l)(% control) |
|---|---|---|---|
| GERPU (156/$m^2$) | *Geranium pusillum* L. (dicot) | 100 | 100 |
| GERDI (148/$m^2$) | *Geranium dissectum* L (dicot) | 100 | 98.3 |
| TRZAW (88/$m^2$) | Wheat (monocot) | 100 | 98.3 |
| HORVW (89/$m^2$) | *Hordeum irregulare Aberg* & *Wiebe* (monocot) | 100 | 100 |
| BARVU (78/$m^2$) | *Barbarea vulgaris* Ait. f. (dicot) | 100 | 100 |

It was concluded that the combination of D-Napropramide and Clomazone was very effective in controlling both the dicot weeds and monocot weeds.

## Claims

1. Use of D- Napropamide as a herbicide for the effective selective control of a dicotyledonous weed at a locus, wherein D-Napropamide is applied at said locus, wherein a monocotyledonous plant species is present at said locus or is planted at said locus after the application of D- Napropamide, and wherein said D- Napropamide exhibits no control, or less control, of said monocotyledonous plant species as compared with the control exhibited against the dicotyledonous weed; wherein the locus is the vicinity of a desired crop selected from winter oilseed rape, strawberries, blackcurrants, gooseberries, raspberries, field trees, shrubs, broccoli, cabbage, calabrese, cauliflower, kale and Brussels sprouts.

2. Use as claimed in claim 1 wherein the monocotyledonous plant species is present at said locus

3. Use as claimed in claim 1 wherein the monocotyledonous plant species is planted at said locus after said application of D- Napropamide .

4. Use as claimed in any one of claims 1 to 3 wherein said monocotyledonous plant species is a desired crop.

5. Use as claimed in any one of claims 1 to 4 wherein said D- Napropamide is inactive against said monocotyledonous plant species.

6. Use as claimed in any of claims 1 to 5, wherein D-Napropamide is applied to said locus before or after emergence of the dicotyledonous weed.

7. Use as claimed in any one of claims 1 to 6, wherein the dicotyledonous weed is selected from chickweed, speedwell, poppy, field bindweed, hairy fleabane, nettleleaf goosefoot, common groundsel, horseweed, common lambsquarters, little mallow, burning nettle, sowthistles, carpetweed, fat hen, blackberry nightshade, small flowered mallow, nettles, deadnettle, knotweed, common sowthistle, amaranthus, Cirsium arvense, Taraxacum officinale, Ranunculus repens, Senecio vulgaris, Papaver rohoeas, Veronica persica, Matricaria sp. Fallopia Convolvulus, Veronica arvensis, Veronica hederofolia, Stellaria media and Polygonum convolvulus.

8. Use as claimed in claim 7 wherein the dicotyledonous weed is *Stellaria media.*

9. Use according to any of claims 1 to 8 wherein the D-Napropamide is applied to said locus at an application rate of 0.5 to 3.0 kg active ingredient/hectare.

## Patentansprüche

1. Verwendung von D-Napropamid als ein Herbizid für die effektive selektive Regulierung eines zweikeimblättrigen Unkrauts an einem Locus, wobei D-Napropamid auf den Locus angewendet wird, wobei eine einkeimblättrige Pflanzenspezies an dem Locus vorhanden ist oder an dem Locus nach der Anwendung von D-Napropamid gepflanzt wird und wobei das D-Napropamid keine Regulierung oder weniger Regulierung der einkeimblättrigen Pflanzenspezies verglichen mit der Regulierung aufweist, die gegenüber dem zweikeimblättrigen Unkraut gezeigt wird, wobei der Locus die nahe Umgebung einer gewünschten Kulturpflanze ist, ausgewählt aus Winterraps, Erdbeeren, schwarzen Johannisbeeren, Stachelbeeren, Himbeeren, Ackerbäumen, Sträuchern, Brokkoli, Kohl, Calabreser, Blumenkohl, Grünkohl und Rosenkohl.

2. Verwendung nach Anspruch 1, wobei die einkeimblättrige Pflanzenspezies an dem Locus vorhanden ist.

3. Verwendung nach Anspruch 1, wobei die einkeimblättrige Pflanzenspezies an dem Locus nach der Anwendung von D-Napropamid gepflanzt wird.

4. Verwendung nach einem der Ansprüche 1 bis 3, wobei die einkeimblättrige Pflanzenspezies eine gewünschte Kulturpflanze ist.

5. Verwendung nach einem der Ansprüche 1 bis 4, wobei das D-Napropamid gegen die einkeimblättrige Pflanzenspezies inaktiv ist.

6. Verwendung nach einem der Ansprüche 1 bis 5, wobei D-Napropamid auf den Locus vor oder nach dem Auflaufen des zweikeimblättrigen Unkrauts angewendet wird.

7. Verwendung nach einem der Ansprüche 1 bis 6, wobei das zweikeimblättrige Unkraut ausgewählt ist aus Vogelmiere, Ehrenpreis, Mohn, Ackerwinde, Südamerikanisches Berufkraut, Mauer-Gänsefuß, Gewöhnliches Greiskraut, Kanadisches Berufkraut, Weißer Gänsefuß, Malva parviflora, Kleine Brennnessel, Gänsedistel, Teppichkraut, Ackermelde, Schwarzer Nachtschatten, Malva parviflora, Nesseln, Taubnessel, Vogelknöterich, Gewöhnliche Gänsedistel, Amarant, Cirsium arvense, Taraxacum officinale, Ranunculus repens, Senecio vulgaris, Papaver rohoeas, Veronica persica, Matricaria sp. Fallopia convolvulus, Veronica arvensis, Veronica hederofolia, Stellaria media und Polygonum convolvulus.

8. Verwendung nach Anspruch 7, wobei das zweikeimblättrige Unkraut *Stellaria media* ist.

9. Verwendung nach einem der Ansprüche 1 bis 8, wobei das D-Napropamid auf den Locus mit einer Aufwandmenge von 0,5 bis 3,0 kg Wirkstoff/Hektar anwendet wird.

## Revendications

1. Utilisation de napropamide D comme herbicide pour la lutte sélective efficace contre une mauvaise herbe dicotylédone au niveau d'un locus, dans laquelle napropamide D est appliqué audit locus, une espèce de plante monocotylédone étant présente au niveau dudit locus ou étant plantée au niveau dudit locus après l'application de napropamide D, et ledit napropamide D ne présentant aucune capacité de lutte, ou une moins grande capacité de lutte, contre ladite espèce de plante monocotylédone en comparaison avec la capacité de lutte présentée contre la mauvaise herbe dicotylédone ; dans laquelle le locus se trouve à proximité d'une culture souhaitée sélectionnée parmi le colza oléagineux d'hiver, les fraises, le cassis, les groseilles à maquereau, les framboises, les arbres des champs, les buissons, le brocoli, le chou, le callose, le chou-fleur, le chou frisé et les choux de Bruxelles.

2. Utilisation telle que définie dans la revendication 1, dans laquelle l'espèce de plante monocotylédone est présente au niveau dudit locus.

3. Utilisation telle que définie dans la revendication 1, dans laquelle l'espèce de plante monocotylédone est plantée au niveau dudit locus après ladite application de napropamide D.

4. Utilisation telle que définie dans l'une quelconque des revendications 1 à 3, dans laquelle ladite espèce de plante monocotylédone est une culture souhaitée.

5. Utilisation telle que définie dans l'une quelconque des revendications 1 à 4, dans laquelle ledit napropamide D est inactif contre ladite espèce de plante monocotylédone.

6. Utilisation telle que définie dans l'une quelconque des revendications 1 à 5, dans laquelle le napropamide D est appliqué audit locus avant ou après l'émergence de la mauvaise herbe dicotylédone.

7. Utilisation telle que définie dans l'une quelconque des revendications 1 à 6, dans laquelle la mauvaise herbe dicotylédone est choisie parmi la stellaire moyenne, la véronique, le coquelicot, le liseron des champs, l'érigéron crépu, le chénopode des murs, le séneçon vulgaire, l'érigéron du Canada, le chénopode blanc, la petite mauve, l'ortie brûlante, les laiterons, la mollugine, le chou gras, la morelle noire, la mauve parviflore, les orties, les orties blanches, la renouée, le laiteron potager, l'amarante, cirsium arvense, taraxacum officinale, ranunculus repens, senecio vulgaris, papaver rohoeas, veronica persica, matricaria sp. fallopia convolvulus, veronica arvensis, veronica hederofolia, stellaria media et polygonum convolvulus.

8. Utilisation telle que définie dans la revendication 7, dans laquelle la mauvaise herbe dicotylédone est *stellaria media.*

9. Utilisation selon l'une quelconque des revendications 1 à 8, dans laquelle le napropamide D est appliqué audit locus à une vitesse d'application de 0,5 à 3,0 kg d'ingrédient actif/hectare.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3718455 A
- WO 2009004642 A
- CN 101731235
- US 20100234225 A1
- EP 0292154 A2


### Non-patent literature cited in the description


- **GLAZE, N.C.** Weed Control in Direct-Seeded Tomato, Lycopersicon esculentum, for Transplants. *Weed Technology,* 1988, vol. 2 (3), 333-337
- **VELEV B ; RANKOV V.** *Gradinarska I Lozarska Nauka,* vol. 16 (5-6), 97-104
- **MAC GIOLLA RI, P.** Herbicide programs in soft fruit crops aimed at minimising the development of resistant weed populations. *Comm. Eur. Communities, [Rep.] Eur, Eur,* 1989, vol. 11561, ISSN 0303-755X, 111-19
- **CHAN et al.** *J. Agric. Food Chem.,* 1975, vol. 23 (5), 1008-1010
- **COLBY,S. R.** *Weeds,* 1967, (15), 20-22